# EUROPÄISCHE PATENTSCHRIFT

(11) **EP 1 320 450 B1**
(45) Veröffentlichungstag und Bekanntmachung des Hinweises auf die Patenterteilung: **30.09.2009**
(21) Anmeldenummer: 01944858.8
(22) Anmeldetag: 09.07.2001
(51) Int. Cl.: B29B 13/06, B29B 13/02, B29B 9/16, F26B 17/12, C08G 63/90

(54) **VORRICHTUNG UND VERFAHREN ZUR THERMISCHEN NACHBEHANDLUNG VON POLYMEREM KUNSTSTOFFMATERIAL IN GRANULATFORM**
DEVICE AND METHOD FOR THE THERMAL SECONDARY TREATMENT OF POLYMER PLASTIC MATERIAL IN GRANULATE FORM
DISPOSITIF ET PROCEDE POUR LE POST-TRAITEMENT THERMIQUE DE MATIERE PLASTIQUE POLYMERE SOUS FORME DE GRANULES

(30) Priorität: 28.09.2000 DE 10049263
(43) Veröffentlichungstag der Anmeldung: 25.06.2003
(73) Patentinhaber: Bühler AG, 9240 Uzwil (CH)
(72) Erfinder: GEISSBÜHLER, Hans, CH-9524 Zuzwil (CH); KÜHNEMUND, Bernd, CH-9230 Flawil (CH); BORER, Camille, CH-8247 Flurlingen (CH); TERRASI, Filippo, CH-6946 Ponte Capriasca/TI (CH)
(74) Vertreter: Wilming, Martin
(86) Internationale Anmeldenummer: PCT/CH2001/000428
(87) Internationale Veröffentlichungsnummer: WO 2002/026460

(56) Entgegenhaltungen:
- DD-A- 271 813
- DE-A- 19 743 461
- DE-A- 19 902 458
- DE-A- 19 957 664
- US-A- 2 474 199
- US-A- 3 325 912
- US-A- 3 905 124
- US-A- 4 092 784
- US-A- 4 584 366

## Beschreibung

Die Erfindung bezieht sich auf eine Vorrichtung zum thermischen Behandeln oder Nachbehandeln von Kunststoffmaterial in Granulatform, insbesondere von Polyestermaterial wie Polyethylen-Terephthalat (PET), gemäss dem Oberbegriff von Anspruch 1 sowie auf ein entsprechendes Verfahren nach Anspruch 20, dass mit der erfindungsgemässen Vorrichtung durchführbar ist.

Verfahren und Vorrichtungen zum Kristallisieren und zur FestphasenNachkondensation polymerer Kunststoffe sind bekannt. So erfolgt z.B. die Nachkondensation von PET in fester Phase bei Temperaturen oberhalb von 200°C in geeigneten Reaktoren über mehrere Stunden hinweg.

Die gattungsbildende DE 197 43 461 A1 beschreibt einen Trockner bzw. Wärmetauscher zur Trocknung bzw. SSP- Vorbehandlung (Aufwärmung ohne Kleben) von PET-Granulat oder auch PA- oder PEN-Granulat. Dieser Trockner weist einen Kanal auf, dessen Seitenwände Elemente wie Lochbleche und dergleichen sind. Die Kanalbreite beträgt vorzugsweise 25 bis 40 cm bei einer Länge bis ca. 3,5 m und eine Höhe von bis zu etwa 15 m. Im unteren Bereich des Kanals können ein Verdrängungskörper und/oder Umlenkelemente angeordnet sein.

Die US 2 474 199 beschreibt ein Verfahren zum Trocknen eines partikelförmigen festen Materials, wobei das partikelförmige Material im wesentlichen vertikal durch einen Trocknungsbereich als eine im wesentlichen kompakte Säule mit einer abwärts gerichteten Bewegung hindurchgeführt wird. Gleichzeitig wird ein Trocknungsgas horizontal durch die Säule mit im wesentlichen gleichförmigen Durchsatz durch den gesamten Säulenquerschnitt geleitet. Um den Fluss des partikelförmigen Materials durch den Begasungsbereich und den darunter angeordneten Auslaufbereich zu beeinflussen, befinden sich im Trocknungsraum bzw. Prozessraum verschiedene Einbauten, durch die eine Vergleichmässigung des Materialflusses und somit eine Vergleichmässigung der Verweilzeit des Materials in dem Trocknungsbereich bzw. Prozessbereich erzielt wird.

Je nach der weiteren Verwendung des Polymer-Granulats ergeben sich unterschiedliche Materialanforderungen. Für die Lebensmittel- Verpackungsindustrie ist z.B. wichtig, dass das Polymer frei von Acetaldehyd ist. Bei der Weiterverarbeitung zu Einweg- oder Mehrweg-Getränkeflaschen sind eine besonders hohe mechanische Festigkeit und Transparenz notwendig. Um eine hohe mechanische Festigkeit zu erreichen, strebt man hohe Polymerisationsgrade an, die durch höhere Reaktionstemperaturen und/oder längere Reaktionszeiten erreicht werden. Dabei muss aber darauf geachtet werden, dass keine Thermolyse oder Oxidation des Materials auftritt, wodurch dieses gelb verfärbt werden kann. Andererseits muss eine Erweichung der Granulatkörner vermieden werden, damit diese nicht zusammenwachsen.

Es ist daher wichtig, je nach der weiteren Verwendung des Polymer-Granulats optimale Reaktionsbedingungen einzuhalten und andererseits dafür zu sorgen, dass auch alle Körner des durch den Reaktor geführten Polymer-Granulats den gleichen Reaktionsbedingungen über die Zeit hinweg ausgesetzt werden. Selbst wenn man hierfür die Betriebsbedingungen des Schachtreaktors zeitlich konstant hält, muss gleichzeitig gewährleistet sein, dass sämtliche Körner des Granulats nahezu gleich lang im Reaktor verweilen.

Dies bedeutet, dass die Geschwindigkeitsverteilung des Granulats über einen zur vertikalen Fliessrichtung senkrechten Querschnitt an jeder vertikalen Position im Schacht gleichförmig sein sollte. Lässt man nicht-gleichförmige Geschwindigkeitsverteilungen an bestimmen vertikalen Positionen des Schachts zu, so müssen diese durch entgegengesetzte Geschwindigkeitsverteilungen an einer anderen vertikalen Position ausgeglichen werden, vorausgesetzt man kann von einem stromlinienförmigen Fliessverhalten des Granulats ausgehen.

Am besten ist es jedoch, wenn man an allen vertikalen Positionen des Schachts eine homogene Geschwindigkeitsverteilung des Granulats erzielt, wobei man dafür sorgen muss, dass aufgrund des Wechselspiels von Haft- und Gleitreibung innerhalb des Granulats und zwischen Granulat und Schacht-Innenwänden keine allzu grosse Abweichung vom gewünschten zeitlich kontinuierlichen Fliessverhalten des Granulats auftritt.

Der Erfindung liegt daher die Aufgabe zugrunde, einerseits eine homogene Geschwindigkeitsverteilung des Polymer-Granulats über dem Schacht-Querschnitt und andererseits ein stockungsfreies kontinuierliches Fliessen des Granulats zu erreichen.

Diese Aufgabe wird durch die kennzeichnenden Merkmale des Anspruchs 1 vorrichtungsmässig und durch Anspruch 20 verfahrensmässig gelöst.

Durch die zumindest in Teilbereichen mikroskopisch glatten aber makroskopisch mit Vorzugsrichtungen strukturierten Innenseiten der Schachtwände treten im Wandbereich Wechselwirkungen zwischen dem Polymer-Granulat und den Innenseiten der Wände auf, wodurch das Fliessverhalten der Körner beeinflusst wird.

Vorteilhafterweise werden diese Teilbereiche durch gasdurchlässige Begasungsbereiche mit lochhaltigen und/oder schlitzartigen Öffnungen gebildet.

Zweckmässigerweise wird sowohl im oberen als auch im unteren Bereich, d.h. dem Auslaufbereich der Schachtwände eine Querbegasung durchgeführt. Dadurch wird mit einer vorgegebenen Bauhöhe des Schachtes eine maximale Begasung erreicht.

Vorzugsweise bestehen die siebartigen Bereiche für die Querbegasung des Granulats aus Spaltsieben, deren Spaltbreiten kleiner als die kleinste Abmessung der Granuletkörner ist. Dies ermöglicht eine Beeinflussung der Bewegung der Körner ausgehend von den Bereichen nahe der Innenwände des Schachtes, die sich jedoch durch die gegenseitige Verhakung und Reibung der Granulatkörner teilweise auf den Schachtinnenbereich überträgt. Diese Auswirkung der Schacht-Innenseiten auf das Granulat ist bei der vorliegenden flachen Bauweise des Schachtes mit rechteckförmigem Querschnitt besonders ausgeprägt, da sich durch die flache Bauweise des Schachts sämtliche Granulatkörner nahe an den Schachtwänden befinden.

Der Schachtauslauf ist zweckmässigerweise trichterartig ausgebildet. Bautechnisch besonders vorteilhaft ist ein trichterartiger Auslauf aus einem Paar gegenüberliegender Rechteckflächen und einem Paar gegenüberliegender Trapezflächen, so dass in einer horizontalen Dimension eine trichterförmige Verengung vorliegt, während in der anderen horizontalen Dimension die volle Breite des Schachtes über die ganze Höhe des Auslaufs beibehalten wird. Bei dieser Bauform sind daher auch im Auslaufbereich grosse Begasungsflächen möglich, wobei die Rechteckseiten bzw. Trapezseiten vorzugsweise vollständig aus Spaltsieben bestehen. Die Richtungsverteilung der Spalte innerhalb der Spaltsiebe kann dann je nach Granulatgeometrie und Prozessbedingungen angepasst werden. Hierfür sind z.B. austauschbare Spaltgitter mit verschiedenen Spaltstrukturen denkbar.

Vorzugsweise bestehen jedoch die Spaltsiebe aus Bereichen, innerhalb derer die Spalte parallel zueinander verlaufen.

Bei einer weiteren bevorzugten Ausführung des Schachtes besteht der trichterartige Auslauf aus einem ersten Paar gegenüberliegender Trapezflächen und einem zweiten Paar gegenüberliegender Trapezflächen. Auf diese Weise entsteht eine kegelstumpfartige Struktur.

Zweckmässigerweise findet die Querbegasung im Auslaufbereich durch die einander gegenüberliegenden grossflächigen Seiten statt. Wie schon erwährt, können dies sowohl Trapezflächen oder Rechteckflächen sein.

Bei einer besonders kostengünstigen Ausführungsform bestehen die grossflächigen, einander gegenüberliegenden Begasungsseiten aus Spaltsieben, deren Spalte parallel zueinander verlaufen und sich senkrecht zu den Basisseiten der Rechteck- bzw. Trapezflächen erstrecken.

Bei der vorliegenden Flachbauweise des Schachtreaktors hat es sich als besonders vorteilhaft erwiesen, eine Beeinflussung des Geschwindigkeitsprofils im Schachtreaktor sowohl durch eine gezielte Verengung des Auslaufs als auch durch eine gezielte Strukturierung der Innenseiten des Schachtes zu bewirken. Da die horizontale Breite des Schachtes typischerweise etwa 5 bis 10 mal so gross wie die horizontale Tiefe des Schachtes ist, und ausserdem die horizontale Tiefe des Schachtes bezogen auf die Korngrösse des Granulats nicht allzu gross ist, ist die Geschwindigkeitsverteilung der Granulatkörner entlang der Tiefe des Schachts relativ homogen. Schaut man sich jedoch die Geschwindigkeitsverteilung der Granulatkörner über die Breite des Schachts an, so stellt man fest, dass in der Mitte eine weitaus grössere Korngeschwindigkeit als in den Randbereichen vorliegt.

Um diese ungleiche Geschwindigkeitsverteilung auszugleichen, sind im Zusammenhang mit der eindimensionalen trichterförmigen Verengung des Auslaufs entlang der Schachtbreite verschiedene Spaltsiebstrukturen in den Trapezflächen vorgesehen.

Besonders vorteilhaft ist eine Trapezfläche, deren Spalte symmetrisch zur Symmetrieachse der Trapezfläche angeordnet sind und beiderseits der Symmetrieachse parallel zu den schrägen Seiten der Trapezfläche verlaufen. Durch die fischgrätenartig angeordneten Spalte des Spaltsiebes werden hier die Granulatkörner derart beeinflusst, dass es im mittigen Bereich des Schachtauslaufs zu einer Bremsung der Granulatkörner und dadurch zu einer Vereinheitlichung des Geschwindigkeitsprofils kommt. Da die Spaltsiebe parallel zu den schrägen Seiten des Trapezes angeordnet sind, hat diese Spaltsiebstruktur zusätzlich den Vorteil, dass bei der Herstellung wenig Verschnitt auftritt.

Eine weitere bevorzugte Ausführung der Spaltsiebstruktur besitzt Spalte, die ebenfalls symmetrisch zur Symmetrieachse der Trapezfläche angeordnet sind, jedoch beiderseits der Symmetrieachse parallel zueinander und gleichzeitig parallel zur Winkelhalbierenden zwischen der Symmetrieachse und den jeweiligen schrägen Seiten der Trapezfläche verlaufen. Bei dieser Bauform ist die Vereinheitlichung des Geschwindigkeitsprofils besonders gut, man muss jedoch bei der Herstellung des Spaltsiebes besonders viel Verschnitt in Kauf nehmen.

Bei einer besonders bevorzugten Ausführungsform des Spaltgitters besitzt die Trapezfläche einen Rechteckbereich, der sich symmetrisch um die Symmetrieachse der Trapezfläche erstreckt und dessen Seiten parallel bzw. orthogonal zu den Basisseiten der Trapezfläche verlaufen, wobei innerhalb des Rechteckbereichs die Spalte parallel zur Symmetrieachse der Trapezfläche verlaufen. Diese Bauform hat eine ähnlich gute Auswirkung auf die Vereinheitlichung des Geschwindigkeitsprofils wie die im vorhergehenden Absatz besprochene, bietet jedoch den Vorteil, dass bei der Herstellung weitaus weniger Verschnitt auftritt. Des weiteren eignet sich der Rechteckbereich zu einer wenig aufwändigen Veränderung der Spaltsiebstruktur, indem man die Breite des Rechteckes entweder vergrössert oder verkleinert. Dies kann durch modulare Bauweise des trapezförmigen Spaltgitters erreicht werden, wobei man zwei gesonderte Trapezhälften mit zu den schrägen Seiten des Trapezes parallelen Spalten sowie ein Rechteck mit zu seinen langen Seiten parallelen Spalten verwendet. Genauso gut könnte der mittige Rechteckbereich durch mehr oder weniger Überlappung einer linken und einer rechten Gitterhälfte variiert werden.

Bei dem erfindungsgemässen Schachtauslauf liegt der Winkel zwischen der Symmetrieachse der Trapezfläche und den schrägen Seiten der Trapezfläche zwischen 10° und 30° und vorzugsweise bei etwa 20°.

Bei der Ausführungsform des trapezförmigen Spaltgitters mit dem mittigen Rechecksbereich beträgt die Länge der sich parallel zu den Basisseiten der Trapezflächen erstreckenden Rechtecksseiten etwa 1/10 der Länge der grossen Basisseite der Trapezfläche und kann einen maximalen Wert annehmen, welcher der kleinen Basisseite der Trapezfläche entspricht.

Bei der Flachbauweise des erfindungsgemässen Schachtes beträgt das Verhältnis der längeren Rechteckseite zur kürzeren Rechteckseite des zur Fliessrichtung des Granulats senkrechten Querschnitts zwischen 20:1 und 5:1. Besonders gute Ergebnisse wurden bei einem Verhältnis von 10:1 erzielt.

Bei sämtlichen Ausführungen des Schachtes ist es besonders vorteilhaft, wenn alle Innenkanten sowohl im oberen Bereich des Schachtes als auch im unteren Bereich des Schachtes abgeschrägt bzw. ausgerundet sind, sodass die horizontalen Querschnitte polygonförmig, oval (Stadionrund), insbesondere aber oktogonförmig sind. Die horizontalen Querschnitte sind daher genau betrachtet nur näherungsweise rechteckförmig. Dies ist besonders wichtig, damit es zu keiner Verkeilung von Granulatkörnern an den Innenkanten kommt. Besonders bei hohen Temperaturen neigen die Granulatkörner zum Kleben. Da sie in der Regel würfel- oder quaderförmig oder auch zylinderförmig sind, besteht dann keine Gefahr, dass sich an einer Innenkante zwei orthogonale Wandseiten als Klebeflächen anbieten. Durch diese Abschrägung der Innenkanten lässt sich somit ein Anbacken von Granulat weitgehend verhindern.

Eine Beeinflussung des Geschwindigkeitsprofils der Granulatkörner im Schacht lässt sich auch durch gezieltes Einbauen von Dächern erreichen, dies so angeordnet sind" dass ihre Spitzen entgegen der Fliessrichtung des Granulats nach oben weisen. Diese Dächer werden vorzugsweise im mittigen Bereich des Schachts angebracht.

Besonders nützlich ist eine Anordnung zahlreicher kleiner Dächer in mehreren horizontalen Reihen im oberen Bereich des Schachts, wobei die Dächerreihen vertikal voneinander beabstandet sind. Dies erweist sich als besonders nützlich zur Einschränkung ruckartiger Bewegungen der gesamten im Schacht enthaltenen Granulatmassen und hat den Vorteil, dass durch den kleineren Querschnitt weniger Bypass-Gas von einer Zone in eine andere Zone gelangt. Ohne derartige horizontale Dächerreihen im oberen Schachtbereich kann es bei bestimmten Prozess- und Granulatbedingungen zu einem unangenehmen Wechselspiel aus Haftreibung und Gleitreibung der Granulatkörner untereinander sowie der Granulatkörner mit der Innenwand des Schachts kommen, was aufgrund der enormen Masse des gesamten Granulats zu gewaltigen Erschütterungen der gesamten Anlage führen kann. Durch die horizontalen Dächerreihen erreicht man eine Trennung verschiedener Bereiche des gesamten Granulatvolumens, sodass ein derartiges Wechselspiel aus Haft- und Gleitreibung ("slip-stick") nur noch für die einzelnen Bereiche getrennt stattfindet, wodurch die Erschütterungen aufgrund der jeweils geringeren Gesamtmasse und des kürzeren Fallweges deutlich verringert werden können. Durch die Geschwindigkeitsveränderungen des Granulats an den Verengungen der Dächer erreicht man anstatt eines synchronen Ruckes der gesamten Granulatmasse stattdessen asynchrone Erschütterungen kleinerer Teilmassen des gesamten Granulats im Schacht.

Vorzugsweise werden die Dächer an den Innenseiten der gegenüberliegenden grossen Schachtwände befestigt. Dies trägt zusätlich zur Stabilisierung der gesamten Schachtstruktur bei.

Weitere Vorteile, Merkmale und Anwendungsmöglichkeiten der Erfindung ergeben sich aus der nun folgenden Beschreibung nicht einzuschränkend aufzufassender bevorzugter Ausführungsbeispiele der Erfindung anhand der Zeichnungen, wobei:
- Fig. 1: eine schematische Perspektivansicht des erfindungsgemässen Schachtes zeigt;
- Fig. 2, 3, 4, 5 und 6: verschiedene Ausführungsformen von Spaltsiebe zeigen;
- Fig. 7: eine schematische Querschnittsansicht entlang einer zu den Seiten 4a und 4b von Fig. 1 parallelen Schnittebene ist;
- Fig. 8: eine schematische Seitenansicht einer ersten Ausführungsform eines Schachtreaktors zeigt;
- Fig. 9: eine schematische Seitenansicht eines zweiten Ausführungsbeispiels eines Schachtreaktors zeigt;
- Fig. 10A und 10B: ausführliche Ansichten verschiedener horizontaler Schnitte Q4
- Fig. 11A und 11B: bzw. Q5 durch den Schachtreaktor von Fig. 1 sind.

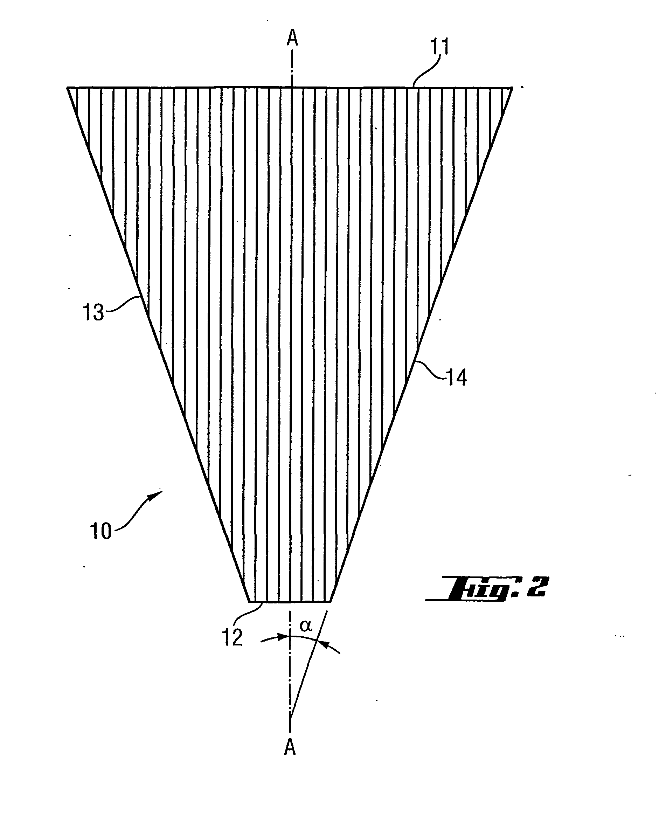

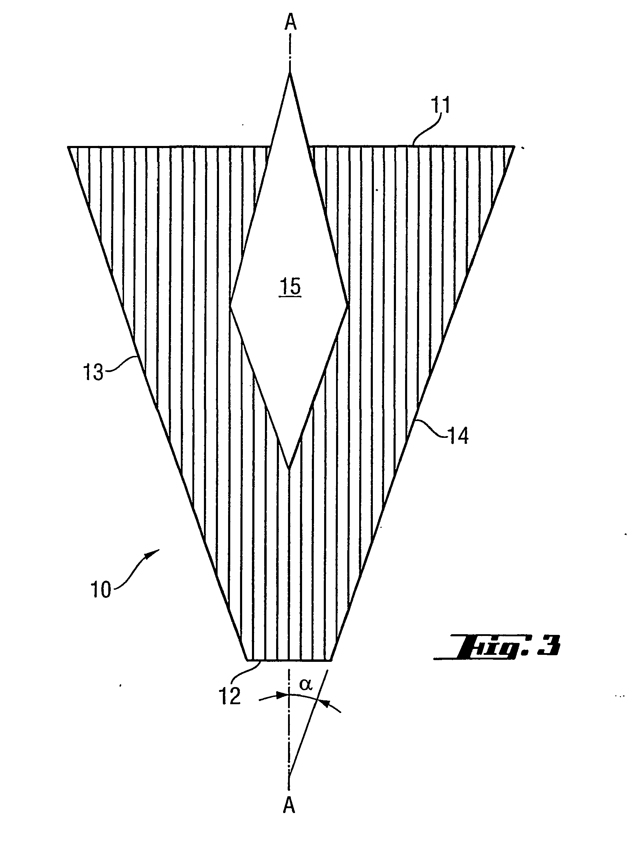

Die in den Figuren 2 und 3 dargestellten Spaltsiebe dienen ausschließlich der Erläuterung des Hintergrundes der Erfindung. Diese Spaltsiebe sind nicht Gegenstand von Ansprüchen.

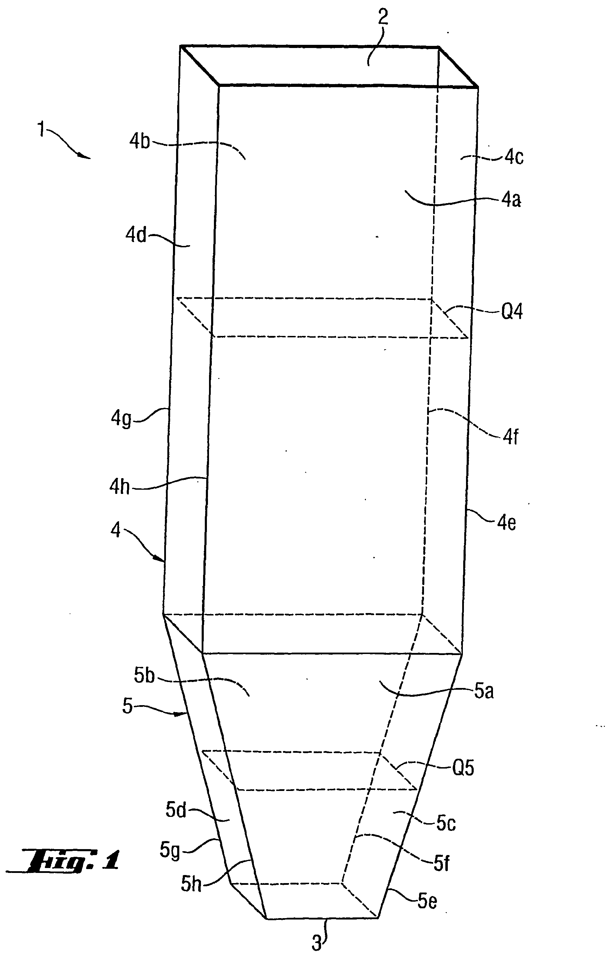

Fig. 1 ist eine schematische Perspektivansicht des erfindungsgemässen Schachtes 1, der aus einem oberen Bereich 4 und einem unteren Bereich 5 besteht.
Am oberen Ende des oberen Bereichs 4 befindet sich eine Einfüllöffnung 2, während am unteren Ende des unteren Bereichs 5 eine Auslauföffnung 3 vorgesehen ist.

Der obere Bereich 4 wird von vier vertikalen Schachtwänden 4a, 4b, 4c und 4d begrenzt und hat über seine gesamte Höhe einen konstanten horizontalen Querschnitt Q4.
An den oberen Bereich 4 schliesst sich ein unterer Bereich 5 an, der durch vier im wesentlichen vertikale Schachtwände 5a, 5b, 5c und 5d begrenzt wird.

Der horizontale Querschnitt Q5 des unteren Bereichs 5 nimmt von oben nach unten kontinuierlich ab.
Die Seiten 5a und 5b des unteren Bereichs sind trapezförmig ausgebildet, während die Seiten 5c und 5d des unteren Bereichs rechteckförmig ausgebildet sind.
Der untere Bereich 5 ist daher in einer Dimension von oben nach unten zunehmend verjüngt.
Die Begasung findet durch siebartige Begasungsbereiche (nicht gezeigt) in den gegenüberliegenden grossen Schachtwänden 4a, 4b; 5a, 5b statt.
Das zu behandelnde Granulat wird in die obere Einfüllöffnung 2 eingefüllt und wandert unter dem Einfluss der Gravitation durch den Schacht 1, um an der unteren Auslauföffnung 3 auszutreten.

Um in den inneren Kantenbereichen des Schachtes 1 ein Anbacken des zum Teil klebrigen PET- Granulats zu verhindern, sind die Kanten 4e, 4f, 4g und 4h des oberen Bereichs 4 sowie die Kanten 5e, 5f, 5g und 5h des unteren Bereichs 5 an ihrer Innenseite abgeschrägt, oder ausgerundet (nicht gezeigt) wodurch sämtliche Innenwinkel zwischen benachbarten Schachtwänden grösser als 90° sind.
Da das PET-Granulat in der Regel quaderförmig oder zylinderförmig ist, wird durch diese Abschrägungen oder Ausrundungen verhindert, dass zwei Flächen eines Granulatskorns an zwei zueinander senkrecht verlaufenden Innenflächen im Bereich einer Innenkante anbacken.

Fig. 2, 3, 4, 5, und 6 zeigen verschiedene Ausführungsformen trapezförmiger Spaltsiebe für den unteren Bereich 5 des Schachtes 1, wobei die Spaltsiebe die gegenüberliegenden Flächen 5a und 5b des Auslaufsbereichs 5 bilden.

Fig. 2 zeigt ein trapezförmiges Spaltgitter 10, bei dem die zueinander parallel verlaufenden Spalte des Spaltgitters parallel zur Symmetrieachse A und senkrecht zu den Basisseiten 11 und 12 des Trapezes vertrauten. Die schrägen Seiten 13 und 14 des Trapezes bilden mit der Symmetrieachse A einen Winkel α, der zwischen 10 und 30°, vorzugsweise bei etwa 20° liegt.
Durch die im wesentlichen senkrechte Ausrichtung der Spalte wird das durch den Schacht 1 von oben nach unten strömende Granulat kaum gebremst, wodurch der Geschwindigkeitsunterschied zwischen Granulat, das sich im inneren Bereich des Schachts nach unten bewegt, und Granulat, das sich im Randbereich des Schachts nach unten bewegt, herabgesetzt wird. Die Begasungsbereiche im oberen Bereich 4 des Schachts sind ebenfalls durch Spaltsiebe gebildet, deren Spalte von oben nach unten senkrecht verlaufen.

Fig. 3 zeigt das trapezförmige Spaltsieb 10 von Fig. 2, bei dem in seiner Mitte parallel zur Symmetrieachse A ein Hindernis 15, ein sogenannter "Diamant", vorgesehen ist. Der Diamant 15 erstreckt sich durchgehend zwischen den beiden Spaltsieben 10, die jeweils die Fläche 5a bzw. 5b des unteren Bereichs 5 des Schachtes 1 bilden. Der Diamant hat drei Aufgaben.
Erstens bremst er im mittigen Bereich des Schachtes 1 das von oben nach unten wandernde Granulat ab, wodurch die vertikale Geschwindigkeit des nach unten strömenden Granulatsstroms vereinheitlicht wird.
Zweitens vermindert der Diamant durch seine Volumenverdrängung zugleich den Anteil desjenigen Auslaufbereiches, in welchem das Granulat sonst (ohne Diamanteinbau) mit bedeutend ungleichmässiger Geschwindigkeitsverteilung durchliefe.
Drittens wird durch die feste Verbindung des Diamanten 15 mit den gegenüberliegenden Seiten 5a und 5b des Auslaufbereichs 5 die Stabilität der gesamten Anlage erhöht. Dies ist besonders wichtig, da im unteren Bereich 5 die Kraft auf die Schachtwände besonders gross ist.

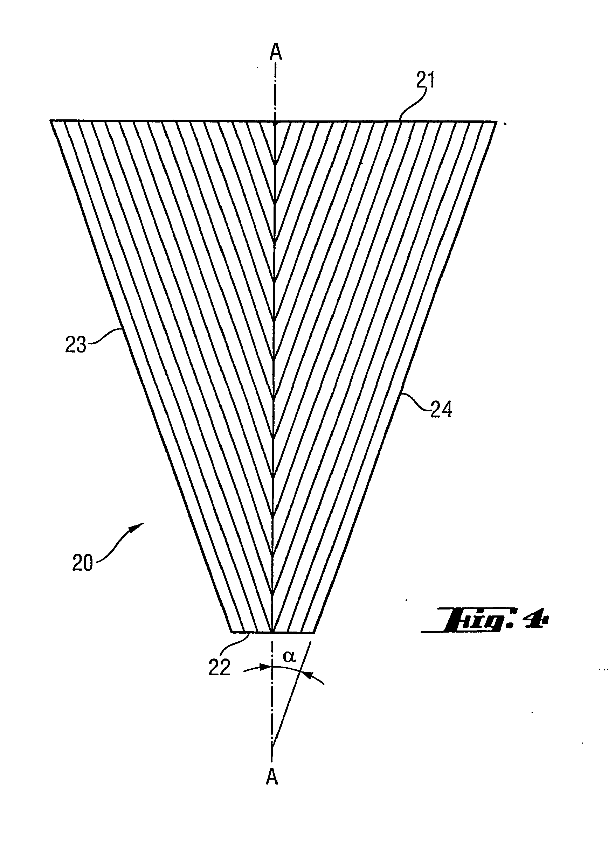

Fig. 4 zeigt eine weitere Ausführungsform eines trapezförmigen Spaltsiebs 20 für die Flächen 5a und 5b des Auslaufsbereichs 5. Das Spaltsieb 20 besteht aus zwei Hälften, die zu der Symmetrieachse A symmetrisch angeordnet sind. In jeder der beiden Hälften des Trapezes verlaufen die Spalte des Spaltsiebs parallel zueinander und parallel zur jeweiligen schrägen Seite 23 bzw. 24. Somit verlaufen die Spalte hier nicht senkrecht zu den Basisseiten 21 und 22 des Trapezes. Mit dieser Anordnung der verschiedenen Spaltsiebbereiche erhält man eine besonders gute Vereinheitlichung der vertikalen Korngeschwindigkeit über den gesamten horizontalen Querschnitt Q4 im oberen Bereich 4 sowie Q5 im unteren Bereich 5 des Schachtes.
Selbstverständlich kann diese Form des trapezförmigen Spaltsiebes ebenso durch einen Diamanten 15 ergänzt werden, oder es können die beiden Ausführungen in Kombination angewendet werden.

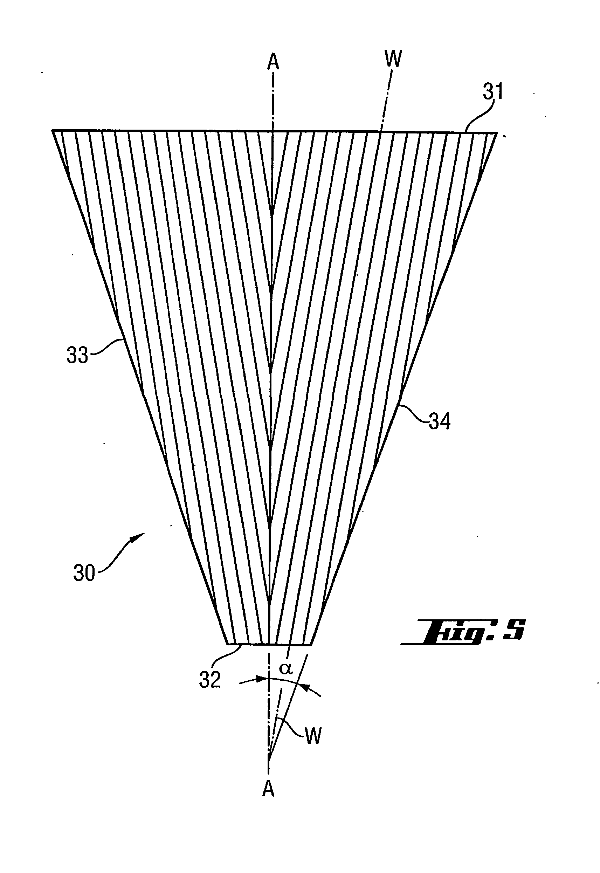

Fig. 5 zeigt eine weitere Ausführungsform eines trapezförmigen Spaltsiebes für die Flächen 5a und 5b des Auslaufsbereichs 5.
Ähnlich wie in Fig. 4 besteht auch hier das trapezförmige Spaltsieb aus zwei zur Symmetrieachse A symmetrischen Bereichen. Innerhalb jedes der Bereiche verlaufen die Spalte parallel zueinander und gleichzeitig parallel zur Winkelhalbierenden W zwischen der Symmetrieachse A und der schrägen Seite 33 bzw. 34 des Trapezes. Auch hier verlaufen die Spalte nicht senkrecht zu den Basisseiten 31 und 32 des Trapezes. Mit dieser Spaltsiebgeometrie wurde eine besonders gute Vereinheitlichung des vertikalen Geschwindigkeitsprofils über die horizontalen Querschnitte Q4 bzw.Q5 erzielt.

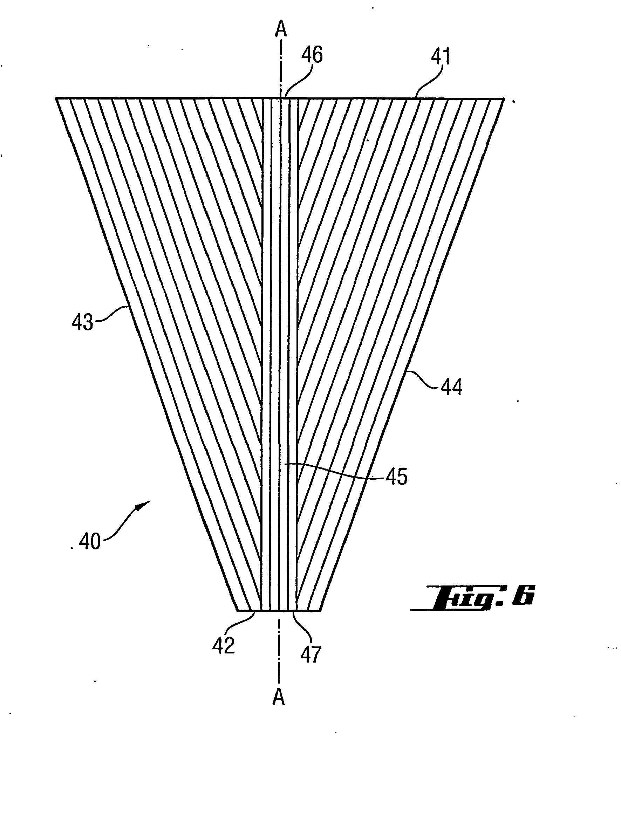

Fig. 6 zeigt eine weitere Ausführungsform eines trapezförmigen Spaltsiebs für die Flächen 5a und 5b des Auslaufsbereichs 5. Das Trapez besteht aus Basisseiten 41 und 42 sowie schrägen Seiten 43 und 44.
Das Spaltsieb 40 ist im wesentlichen identisch mit dem Spaltsieb 4, doch enthält es zusätzlich in seinem mittigen Bereich symmetrisch um die Symmetrieachse A einen rechteckförmigen Bereich, dessen Spalte parallel zur Symmetrieachse A verlaufen. Die obere und untere Rechteckseite 46 und 47 bildet einen Teil der Basisseite 41 bzw. 42 des trapezförmigen Spaltsiebs. Mit diesem Spaltsieb 40 wird im wesentlichen eine weitgehende perfekte Vereinheitlichung des Granulatgeschwindigkeitsprofils über den gesamten horizontalen Querschnitt des Schachtes 1 erzielt. Das Ergebnis ist im wesentlichen identisch wie bei dem Spaltsieb 30 von Fig.5.
Allerdings ergibt sich gegenüber dem Spaltsieb von Fig. 5 ein produktionstechnischer Vorteil, da beim Ausschneiden der verschiedenen Spaltsiebbereiche weniger Verschnitt entsteht. Ein weiterer Vorteil besteht darin, dass die Breite des mittigen Rechteckbereichs, das heisst die Länge der Rechteckseiten 46 und 47 je nach Bedarf verändert werden kann.

Da das Granulat-Geschwindigkeitsprofil über einem horizontalen Querschnitt im Schacht sowohl von den Schachtabmessungen, den Rauhigkeiten der Innenwandflächen, als auch von der Beschaffenheit und den Abmessungen der Granulatkörner abhängt, lässt sich durch Einstellen der Breite des mittigen Rechteckbereichs eine jeweils angepasste Korrektur für verschiedenen Schachtgrössen als auch Granulatsorten bewerkstelligen.
Selbstverständlich können auch bei Bedarf die verschiedenen Konstruktionsmerkmale der Figuren 2 bis 6 kombiniert werden.

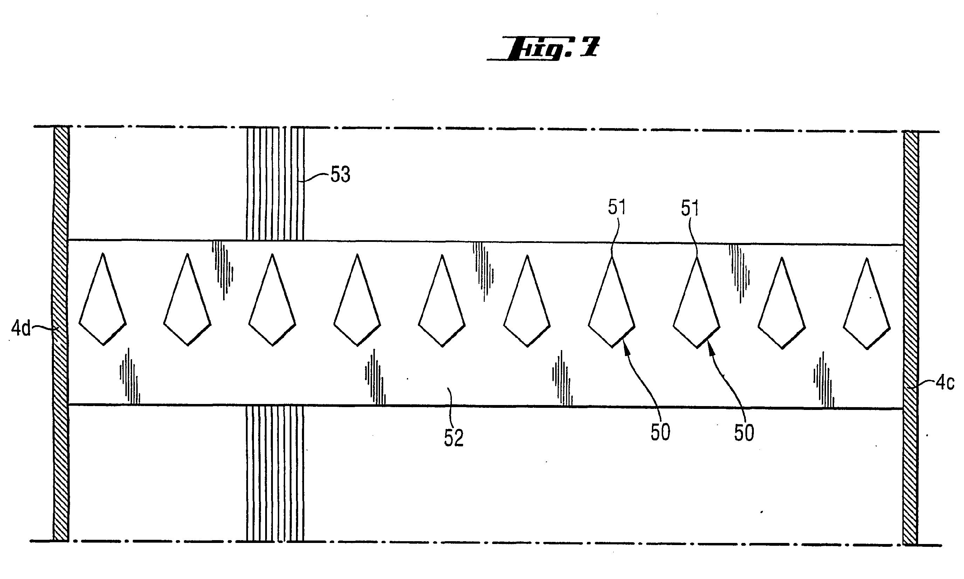

Fig. 7 zeigt eine schematische Querschnittsansicht entlang einer zu den gegenüberliegenden Schachtseiten 4a und 4b von Fig.1 parallelen Schnittebene. Man erkennt insgesamt 10 Dächer 50, die sich senkrecht zur Zeichenebene, das heisst senkrecht zu den Seiten 4a und 4b des oberen Bereichs 4 des Schachtes erstrecken. Die Spitzen 51 der Dächer weisen noch oben. Die gesamte Dächerreihe ist an einem verstärkten Befestigungsbereich 52 mit den Seiten 4a und 5a verbunden. Beiderseits des Befestigungsbereichs 52 erstrecken sich Spaltsiebbereiche 53.

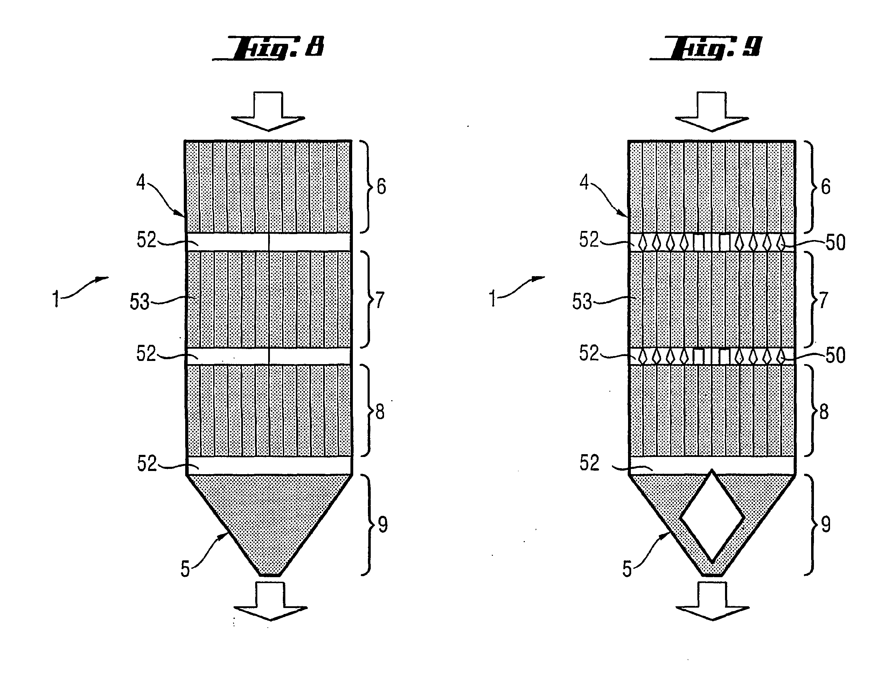

Fig. 8 zeigt eine schematische Seitenansicht einer ersten Ausführungsform eines Schachtreaktors. Der obere Bereich 4 des Schachtes 1 weist Begasungsbereiche 6, 7 und 8 auf, während der untere Bereich 5 des Schachtes 1 einen Begasungsbereich 9 aufweist. Zwischen den Begasungsbereichen 6, 7, 8 und 9 befindet sich jeweils ein Befestigungsbereich 52, durch den die Stabilität des gesamten Schachtes 1 erhöht wird. Die Begasungsbereiche 6, 7, 8 und 9 bestehen jeweils aus einem Spaltsiebbereich 53.

Fig. 9 ist eine schematische Seitenansicht einer weiteren Ausführungsform des erfindungsgemässen Schachtreaktors. Die Ausführungsform von Fig. 9 unterscheidet sich von derjenigen von Fig. 8 durch diverse Hindernisse im Schachtinneren. So sind zwischen den Begasungsbereichen 6 und 7 sowie zwischen den Begasungsbereichen 7 und 8 jeweils eine Dächerreihe aus Dächern 50 angeordnet, und im Auslaufbereich 5 befindet sich ein Diamant 15.
Durch Verkantungen der Granulatkörner untereinander sowie durch ein Wechselspiel zwischen Haftreibung und Gleitreibung innerhalb der Granulatkörner sowie zwischen den Granulatkörnern und den Schachtinnnenwänden können sich im Granulatstrom Spannungen aufbauen, die sich von Zeit zu Zeit ruckartig lösen. Dies führt zu hohen Belastungen des gesamten Schachtreaktors. Durch die an verschiedenen Höhen des oberen Bereichs 4 des Schachtes 1 angebrachten Dächerreihen und die damit erwirkten Geschwindigkeitsveränderungen des Granulats wird das gesamte Granulatvolumen im Schacht 1 in verschiedene Bereiche unterteilt, die im wesentlichen den Begasungsbereichen 6, 7 und 8 entsprechen.
Durch diese Trennung finden die ruckartigen Entladungen der Spannungen des Granulats nur noch in den jeweiligen Teilbereichen 6, 7 und 8 statt, sodass die bei einer derartigen ruckartigen Entladung beteiligte Masse viel geringer als die Gesamtmasse des Granulats ist. Die Befestigungsbereiche 52 in Fig. 8 und 9 können durch Flacheisen verstärkt sein, die sich von den äusseren Schachtwänden senkrecht vom Schacht 1 wegerstrecken.

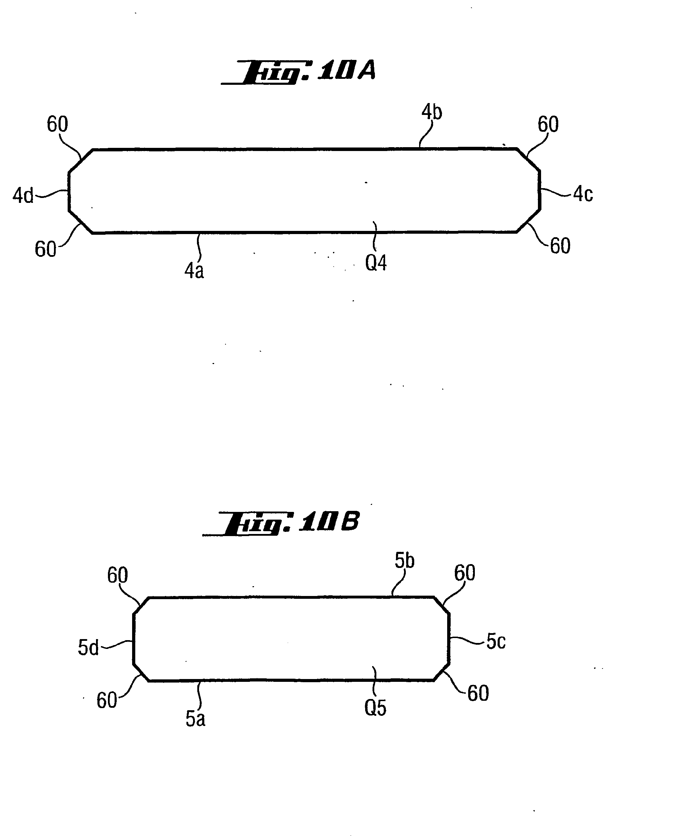

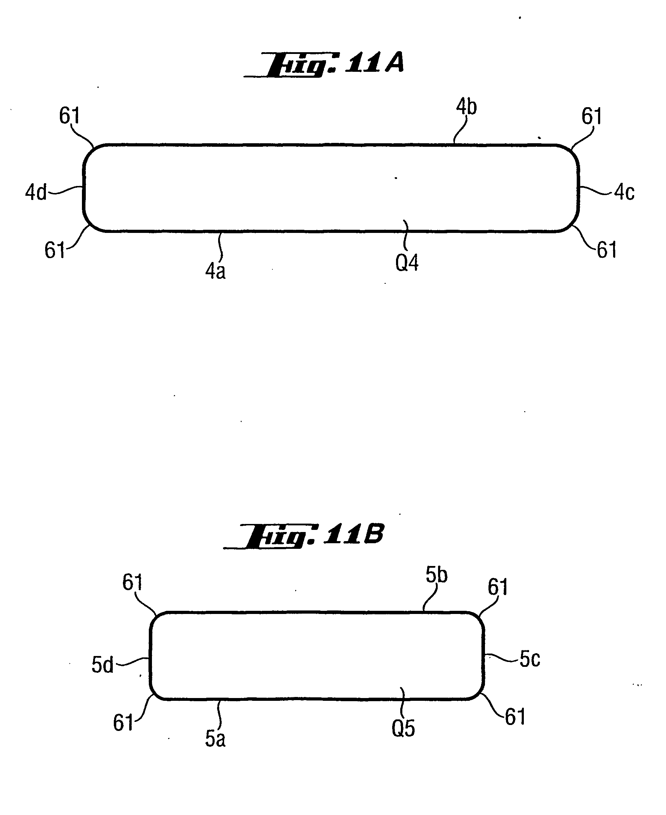

Fig. 10A und 11A zeigen jeweils eine Detailansicht des horizontalen Querschnitts Q4. Wie man erkennt, ist der horizontale Querschnitt Q4 nur näherungsweise rechteckförmig.
Sämtliche Innenkanten des oberen Bereichs des Schachtes 1 sind abgeschrägt bzw. ausgerundet. Durch diese Abschrägungen 60 bzw. Ausrundungen 61 sind sämtliche Innenwinkel im Kantenbereich grösser als 90°, wodurch ein Anbacken der vorwiegend quaderförmigen oder zylinderförmigen Granulatkörner weitgehend verhindert wird.

Fig. 10B und 11B zeigen jeweils eine Detailansicht des horizontalen Querschnitts Q5 aus dem unteren Bereich 5 des Schachtes 1.
Auch hier sind sämtliche Innenkanten abgeschrägt bzw. ausgerundet, und die Abschrägungen 60 bzw. Ausrundungen 61 verhindern ein Anbacken von Granulatkörnern im Kantenbereich. Natürlich können die Abschrägungen 60 auch durch Ausrundungen 61 ersetzt werden, diese sind jedoch weniger kostengünstig in der Herstellung als die genannten Abschrägungen.

Wie gezeigt wurde, kann man mit den Spaltsieben begasbare Behälterwände erreichen, ohne den Materialfluss durch Reibung zu stark zu behindern. Beim Zusammenzug des Granulats auf einen kleinen Schleusenquerschnitt im Auslassbereich 5 hat aber die Spaltrichtung einen grossen Einfluss auf die Granulat-Fliessgeschwindigkeit und somit auf das Verweilzeitspektrum des Granulats im Auslauf. Die vielen und langen Spalten der Spaltsiebe ergeben einen grossen Fliesswiderstand, wenn das Granulat nicht parallel zu den Spalten fliessen kann und es ist möglich, das Granulat durch die Richtung der Spalte umzulenken.
Durch spezielle Anordnungen der Spalte, insbesondere im Auslaufbereich 5 des Schachtes 1, kann das Geschwindigkeitsprofil und somit daher das Verweilzeitspektrum je nach Bedarf beeinflusst werden.

### Bezugszeichenliste

- 1: Schacht
- 2: Einfüllöffnung
- 3: Auslauföffnung
- 4: oberer Bereich
- 5: unterer Bereich
- 6, 7, 8, 9,: Begasungsbereich
- 4a, 4b, 4c, 4d: Schachtwände, oberer Bereich
- 5a, 5b, 5c, 5d: Schachtwände, unterer Bereich
- Q4: horizontaler Querschnitt, oberer Bereich
- Q5: horizontaler Querschnitt, unterer Bereich
- 4e, 4f, 4g, 4h: Schachtkanten, oberer Bereich
- 5e, 5f, 5g, 5h: Schachtkanten, unterer Bereich
- 10: Spaltsieb, trapezförmig
- 20: Spaltsieb, trapezförmig
- 30: Spaltsieb, trapezförmig
- 40: Spaltsieb, trapezförmig
- 11, 12: Basisseiten von Spaltsieb 10
- 13, 14: schräge Seiten von Spaltsieb 10
- 15: Diamant, Hindernis
- 21, 22: Basisseiten von Spaltsieb 20
- 23, 24: schräge Seiten von Spaltsieb 20
- 31,32: Basisseiten von Spaltsieb 30
- 33, 34: schräge Seiten von Spaltsieb 30
- 41, 42: Basisseiten von Spaltsieb 40 .
- 43, 44: schräge Seiten von Spaltsieb 40
- 45: Rechteckbereich von Spaltsieb 40
- 46, 47: Rechteckseiten von Rechteck 45
- A: Symmetrieachse
- W: Winkelhalbierende
- α: Winkel zwischen Symmetrieachse A und schräger Trapezseite
- 50: Dach
- 51: obere Dachspitze
- 52: Befestigungsbereich
- 53: Spaltsiebbereich
- 60: Abschrägung
- 61: Ausrundungen

## Patentansprüche

1. Vorrichtung zum thermischen Behandeln oder Nachbehandeln von Kunststoffmaterial in Granulatform, insbesondere von Polyestermaterial wie Polyethylen-Terephthalat (PET), mit einem vertikalen Schacht (1), der eine obere Einfüllöffnung (2) und eine untere Auslauföffnung (3) hat und in dem das Granulat von oben nach unten in vertikaler Richtung geführt wird, wobei der Schacht (1) im wesentlichen einen oberen Bereich (4), dessen rechteckförmiger horizontaler Querschnitt Q4 entlang der vertikalen Richtung im wesentlichen konstant ist, und einen unteren Bereich (5), dessen horizontaler Querschnitt Q5 sich entlang der vertikalen Richtung nach unten hin verkleinert, aufweist, und wobei die vertikalen Schachtwände zumindest in Teilbereichen siebartige Bereiche mit Spalten, deren Spaltbreite kleiner als die kleinste Granulatabmessung ist, aufweisen, die eine Querbegasung des Granulats mit einem beispielsweise Stickstoff enthaltenden Gasgemisch ermöglichen, wobei die siebartigen Teilbereiche für die Querbegasung zumindest in den gegenüberliegenden Schachtwänden (4a, 4b, 5a, 5b) angeordnet sind, deren horizontale Breite den längeren Rechteckseiten des jeweiligen Querschnitts Q4, Q5 entspricht, wobei die Innenflächen der Schachtwände (4a, 4b, 4c, 4d, 5a, 5b, 5c, 5d) zumindest in Teilbereichen (6, 7, 8, 9) aus einem Material mit glatter Oberfläche bestehen, **dadurch gekennzeichnet, dass** die siebartigen Teilbereiche an den Innenseiten der Schachtwände Oberflächenstrukturen mit bestimmten Vorzugsrichtungen haben, deren Grössenordnung senkrecht zu den Vorzugsrichtungen im wesentlichen den Abmessungen der Körner des Granulats entspricht, wobei die siebartigen Teilbereiche für die Querbegasung des Granulats aus Spaltsieben (10; 20; 30; 40) bestehen, deren Spalte fischgrätenförmig angeordnet sind und deren Spaltbreite kleiner als die kleinste Granulatabmessung ist, so dass im Wandbereich Wechselwirkungen zwischen dem Granulat und den Innenseiten der Wände auftreten, wodurch das Fliessverhalten der Granulatkörner derart beeinflusst wird, dass es im mittigen Bereich des Schachtauslaufs zu einer Bremsung der Granulatkörner und **dadurch** zu einer Vereinheitlichung des Geschwindigkeitsprofils kommt.

2. Vorrichtung nach Anspruch 1, **dadurch gekennzeichnet, dass** die Teilbereiche (6, 7, 8, 9) gasdurchlässige Begasungsbereiche sind.

3. Vorrichtung nach Anspruch 1 oder 2, **dadurch gekennzeichnet, dass** die Schachtwände (4a, 4b, 5a, 5b) sowohl im oberen Bereich (4) als auch im unteren Bereich (5) siebartige Bereiche bzw. Teilbereiche für die Querbegasung des Granulats aufweisen.

4. Vorrichtung nach einem der Ansprüche 1 bis 3, **dadurch gekennzeichnet, dass** sich die Spalte in den Spaltsieben (10) im wesentlichen in der vertikalen Richtung erstrecken.

5. Vorrichtung nach einem der Ansprüche 1 bis 3, **dadurch gekennzeichnet, dass** im unteren Bereich (5) der horizontale Querschnitt Q5 zumindest in einer horizontalen Dimension entlang der vertikalen Richtung nach unten hin abnimmt, sodass ein trichterartiger Auslauf gebildet wird.

6. Vorrichtung nach Anspruch 5, **dadurch gekennzeichnet, dass** der trichterartige Auslauf (5) aus einem Paar gegenüberliegender Rechteckflächen und einem Paar gegenüberliegender Trapezflächen besteht, wobei sich die Rechteckflächen jeweils an die gegenüberliegenden Schachtwände des oberen Bereichs (4) anschliessen, deren horizontale Breite den längeren Rechteckseiten des Querschnitts Q4 entspricht.

7. Vorrichtung nach Anspruch 6, **dadurch gekennzeichnet, dass** die Rechteckflächen Spaltsiebe aufweisen, deren Spalte parallel zu den Rechteckseiten verlaufen.

8. Vorrichtung nach Anspruch 7, **dadurch gekennzeichnet, dass** der trichterartige Auslauf (5) aus einem ersten Paar gegenüberliegender Trapezflächen und einem zweiten Paar gegenüberliegender Trapezflächen besteht.

9. Vorrichtung nach Anspruch 8, **dadurch gekennzeichnet, dass** bei einem der Paare der Trapezflächen (5a, 5b), die sich an die breiteren Schachtwände (4a, 4b) anschliessen, die Trapezflächen aus Spaltsieben (10) bestehen, deren Spalte parallel zueinander und senkrecht zu den Basisseiten (11, 12) der jeweiligen Trapezfläche verlaufen.

10. Vorrichtung nach Anspruch 8, **dadurch gekennzeichnet, dass** bei einem der Paare der Trapezflächen (5a, 5b), die sich an die breiteren Schachtwände (4a, 4b) anschliessen, die Trapezflächen aus Spaltsieben (20) bestehen, deren Spalte symmetrisch zur Symmetrieachse A der Trapezfläche angeordnet sind und beiderseits der Symmetrieachse A parallel zu den schrägen Seiten (23, 24) der jeweiligen Trapezfläche verlaufen.

11. Vorrichtung nach Anspruch 8, **dadurch gekennzeichnet, dass** bei einem der Paare der Trapezflächen (5a, 5b), die sich an die breiteren Schachtwände (4a, 4b) anschliessen, die Trapezflächen aus Spaltsieben (30) bestehen, deren Spalte symmetrisch zur Symmetrieachse A der Trapezfläche angeordnet sind und beiderseits der Symmetrieachse A parallel zueinander und parallel zur Winkelhalbierenden W zwischen der Symmetrieachse A und der jeweiligen schrägen Seite (33, 34) der Trapezfläche verlaufen.

12. Vorrichtung nach Anspruch 10, **dadurch gekennzeichnet, dass** die Trapezfläche einen Rechteckbereich (45) aufweist, der sich symmetrisch um die Symmetrieachse A erstreckt und dessen Seiten parallel bzw. orthogonal zu den Basisseiten (41, 42) der jeweiligen Trapezfläche verlaufen, wobei innerhalb des Rechteckbereiches (45) die Spalte parallel zur Symmetrieachse A der Trapezfläche verlaufen.

13. Vorrichtung nach einem der Ansprüche 9 bis 12, **dadurch gekennzeichnet, dass** der Winkel α zwischen der Symmetrieachse A der Trapezfläche und den schrägen Seiten (23, 24; 33, 34; 43, 44) der Trapezflächen in dem Bereich zwischen 10° und 30° liegt und vorzugsweise etwa 20° beträgt.

14. Vorrichtung nach Anspruch 12, **dadurch gekennzeichnet, dass** die Länge der Rechteckseiten (46, 47), die sich parallel zu den Basisseiten (41, 42) der Trapezfläche erstrecken, in einem Bereich liegt, der sich von etwa 1/10 der Länge der grösseren Basisseite (41) der Trapezfläche bis zur Länge der kleineren Basisseite (42) der Trapezfläche erstreckt.

15. Vorrichtung nach einem der vorhergehenden Ansprüche, **dadurch gekennzeichnet, dass** in dem oberen Bereich (4) das Verhältnis zwischen der längeren Rechteckseite L4 und der kürzeren Rechteckseite K4 des Querschnitts Q4 zwischen 20:1 und 5:1, vorzugsweise bei etwa 10:1 liegt.

16. Vorrichtung nach einem der vorhergehenden Ansprüche, **dadurch gekennzeichnet, dass** alle Innenkanten (4e, 4f, 4g, 4h, 5e, 5f, 5g, 5h) in den Bereichen (4, 5) des Schachtes (1) abgeschrägt oder ausgerundet sind, sodass die horizontalen Querschnitte Q4, Q5 polygonförmig, oval (Stadionrund), insbesondere oktogonförmig sind, und die horizontalen Querschnitte Q4, Q5 nur näherungsweise rechteckförmig sind.

17. Vorrichtung nach einem der vorhergehenden Ansprüche, **dadurch gekennzeichnet, dass** im Innern des Schachtes Dächer (50) angeordnet sind, deren Spitzen (51) nach oben weisen.

18. Vorrichtung nach Anspruch 17, **dadurch gekennzeichnet, dass** die Dächer in mehreren horizontalen Reihen im Schacht (1) angeordnet sind, die voneinander vertikal beabstandet sind.

19. Vorrichtung nach einem der Ansprüche 17 oder 18, **dadurch gekennzeichnet, dass** die Dächer (50) an der Innenseite der gegenüberliegenden grossen Schachtwände (4a, 4b) befestigt sind.

20. Verfahren zum thermischen Behandeln oder Nachbehandeln von Kunststoffmaterialien in Granulatform, insbesondere Polyestermaterial wie Polyethylen-Terephthalat (PET), unter Verwendung der Vorrichtung nach einem der Ansprüche 1 bis 19, wobei das Verfahren die folgenden Schritte aufweist:
➢ Beschicken des oberen Bereichs des Schachtes mit Granulat;
➢ beidseitiges Begasen des sich durch den Schacht nach unten bewegenden Granulats mit Luft oder Gas, insbesondere mit reinem Stickstoff, einer Temperatur von 180° bis 250°C, in Querrichtung durch die siebartigen Teilbereiche des oberen Bereichs des Schachtes;
➢ beidseitiges Begasen des sich abwärts bewegenden Granulats mit Luft, Gas, insbesondere mit reinem Stickstoff, einer Temperatur von etwa 80° bis 120°C durch die siebartigen Teilbereiche des unteren Bereichs des Schachtes;
➢ Austragen des Granulats aus dem Schacht durch den trichterförmigen Auslauf.

## Claims

1. A device for the thermal or subsequent treatment of plastic material in granule form, in particular of polyester material such as polyethylene terephthalate (PET), with a vertical shaft (1) having an upper charging opening (2) and lower discharge opening (3), and in which the granules are conveyed from the top down in a vertical direction, wherein the shaft (1) essentially exhibits an upper area (4) with a rectangular cross section Q4 that is essentially constant along the vertical direction, and a lower area (5) whose horizontal cross section Q5 tapers downwardly along the vertical direction, and wherein at least partial areas of the vertical shaft walls exhibit screen-like areas with gaps having a clearance measuring less than the smallest granule size, which enable a transverse gassing of the granules with, for example, a gas mixture containing nitrogen wherein the screen-like partial areas for the transverse gassing are arranged at least in the opposing shaft walls (4a, 4b, 5a, 5b), whose horizontal width corresponds to the longer rectangular sides of the respective cross section Q4, Q5, wherein the inner surfaces of the shaft walls (4a, 4b, 4c, 4d, 5a, 5b, 5c, 5d) consist at least in partial areas (6, 7, 8, 9) of a material with a smooth surface, **characterized in that** the screen-like partial areas on the insides of the shaft walls have surface structures with certain preferred directions, which have a magnitude perpendicular to the preferred directions essentially corresponding to the dimensions of the granule grains, wherein the screen-like partial areas for the transverse gassing of the granules consist of slotted hole screens (10; 20; 30; 40), whose gaps are arranged in a fish grate configuration, and whose cap clearance is less than the smallest granule dimension, so that interactions between the granules and the insides of the walls arise in the wall area, thereby influencing the flow characteristics of the granule grains in such a way as to decelerate the granule grains in the central area of the shaft outlet, making the velocity profile more uniform as a result.

2. The device according to claim 1, **characterized in that** the partial areas (6, 7, 8, 9) are gas-permeable gassing areas.

3. The device according to claim 1 or 2, **characterized in that** both the upper area (4) and lower area (5) of the shaft walls (4a, 4b, 5a, 5b) exhibit screen-like areas or partial areas for the transverse gassing of the granules.

4. The device according to one of claims 1 to 3, **characterized in that** the gaps in the slotted hole screens (10) extend essentially in the vertical direction.

5. The device according to one of claims 1 to 3, **characterized in that** the horizontal cross section Q5 in the lower area (5) tapers downwardly along the vertical direction at least in a horizontal dimension, thereby forming a funnel-like outlet.

6. The device according to claim 5, **characterized in that** the funnel-like outlet (5) consists of a pair of opposing rectangular surfaces and a pair of opposing trapezoidal surfaces, wherein the rectangular surfaces each abut the opposing shaft walls of the upper area (4), whose horizontal width corresponds to the longer rectangular sides of the cross section Q4.

7. The device according to claim 6, **characterized in that** the rectangular surfaces exhibit slotted hole screens, whose gaps run parallel to the rectangular sides.

8. The device according to claim 7, **characterized in that** the funnel-like outlet (5) consists of a first pair of opposing trapezoidal surfaces and a second pair of opposing trapezoidal surfaces.

9. The device according to claim 8, **characterized in that** the trapezoidal surfaces in one of the pairs of trapezoidal surfaces (5a, 5b) that adjoin the wider shaft walls (4a, 4b) consist of slotted hole screens (10), whose gaps run parallel to each other and perpendicular to the base sides (11, 12) of the respective trapezoidal surface.

10. The device according to claim 8, **characterized in that** the trapezoidal surfaces in one of the pairs of trapezoidal surfaces (5a, 5b) that adjoin the wider shaft walls (4a, 4b) consist of slotted hole screens (20), whose gaps are arranged symmetrically to the symmetrical axis A of the trapezoidal surface and run parallel to the inclined sides (23, 24) of the respective trapezoidal surface on both sides of the symmetrical axis A.

11. The device according to claim 8, **characterized in that** the trapezoidal surfaces in one of the pairs of trapezoidal surfaces (5a, 5b) that adjoin the wider shaft walls (4a, 4b) consist of slotted hole screens (30), whose gaps are arranged symmetrically to the symmetrical axis A of the trapezoidal surface and run parallel to each other and parallel to the bisector W between the symmetrical axis A and the respective inclined side (33, 34) of the trapezoidal surface on both sides of the symmetrical axis A.

12. The device according to claim 10, **characterized in that** the trapezoidal surface exhibits a rectangular area (45) that extends symmetrically around the symmetrical axis A, and whose sides run parallel or orthogonal to the base sides (41, 42) of the respective trapezoidal surface, wherein the gaps within the rectangular area (45) run parallel to the symmetrical axis A of the trapezoidal surface.

13. The device according to one of claims 9 to 12, **characterized in that** the angle α between the symmetrical axis A of the trapezoidal surface and the inclined sides (23, 24; 33, 34; 43, 44) of the trapezoidal surfaces lies between 10° and 30°, and preferably measures about 20°C.

14. The device according to claim 12, **characterized in that** the length of the rectangular sides (46, 47) extending parallel to the base sides (41, 42) of the trapezoidal surface lie in a range extending from about 1/10 the length of the larger base side (41) of the trapezoidal surface to the length of the smaller base side (42) of the trapezoidal surface.

15. The device according to one of the preceding claims, **characterized in that** in the upper area (4) the ratio between the longer rectangular side L4 and shorter rectangular side K4 of the cross section Q4 lies between 20:1 and 5:1, preferably at about 10:1.

16. The device according to one of the preceding claims, **characterized in that** all inner edges (4e, 4f, 4g, 4h, 5e, 5f, 5g, 5h) in the areas (4, 5) of the shaft (1) are inclined or rounded, so that the horizontal cross sections Q4, Q5 are polygonal, oval (round like a stadium), in particular octagonal, and the horizontal cross sections Q4, Q5 are only approximately rectangular.

17. The device according to one of the preceding claims, **characterized in that** roofs (50) are arranged inside the shaft with upwardly pointing tips (51).

18. The device according to claim 17, **characterized in that** the roofs are arranged in several horizontal rows in the shaft (1) spaced vertically apart.

19. The device according to one of claims 17 or 18, **characterized in that** the roofs (50) are secured on the inside of the opposing large shaft walls (4a, 4b).

20. A method for the thermal or subsequent treatment of plastic material in granule form, in particular of polyester material such as polyethylene terephthalate (PET), using the device according to one of claims 1 to 19, wherein the method involves the following steps:
- Loading the upper area of the shaft with granules;
- Bilaterally gassing the granules moving downwardly through the shaft with air or gas, in particular with pure nitrogen with a temperature of 180° to 250°C in the transverse direction through the screen-like partial areas of the upper area of the shaft;
- Bilaterally gassing the downwardly moving granules with air, gas, in particular with pure nitrogen with a temperature of about 80° to 120°C through the screen-like partial areas of the lower area of the shaft;
- Discharging the granules from the shaft via the funnel-shaped outlet.

## Revendications

1. Dispositif pour le traitement ou le post-traitement thermique de matière plastique sous forme de granulés, notamment de matière polyester comme du polyéthylèneterephtalate (PET) avec un puits vertical (1), qui possède une ouverture de remplissage supérieure (2) et une ouverture de sortie inférieure (3) et dans lequel les granulés sont guidés de haut en bas dans la direction verticale, lequel puits (1) présente essentiellement une zone supérieure (4), dont la section transversale horizontale rectangulaire Q4 est essentiellement constante le long de la direction verticale, et une zone inférieure (5), dont la section transversale horizontale Q5 va en rétrécissant vers le bas le long de la direction verticale, et dans lequel les parois de puits verticales présentent au moins dans des zones partielles des zones de type tamis avec des fentes, dont la largeur de fente est inférieure à la dimension de granulé la plus petite, qui permettent une fumigation transversale des granulés avec un azote par exemple, lesquelles zones partielles de type tamis sont disposées pour la fumigation transversale au moins dans les parois de puits se faisant face (4a,4b,5a,5b), dont la largeur horizontale correspond aux côtés de rectangle de la section transversale Q4,Q5 respective, moyennant quoi les surfaces intérieures des parois de puits (4a,4b,4c,4d,5a,5b,5c,5d) sont constituées au moins dans des zones partielles (6,7,8,9) d'un matériau avec une surface lisse, **caractérisé en ce que** les zones partielles de type tamis possèdent sur les côtés intérieurs des parois de puits des structures de surfaces avec des directions d'avance déterminées, dont l'ordre de grandeur correspond perpendiculairement aux directions d'avance essentiellement aux dimensions des grains de granulés, moyennant quoi les zones partielles de type tamis sont constituées pour la fumigation transversale des granulés de tamis à fentes (10 ;20 ;30 ;40), dont les fentes sont disposées en forme d'arêtes de poisson, et dont la largeur de fente es plus petite que la dimension la plus petite de granulé, de telle sorte que dans la zone de paroi des effets alternatifs entre le granulé et les côtés intérieurs des parois se produisent, moyennant quoi le comportement d'écoulement des grains de granulés est influencé de telle sorte qu'il se produise dans la zone centrale de la sortie de puits un freinage des grains de granulé et donc une unification du profil de vitesse.

2. Dispositif selon la revendication 1, **caractérisé en ce que** les zones partielles (6,7,8,9) sont des zones de fumigation perméables aux gaz.

3. Dispositif selon la revendication 1 ou 2, **caractérisé en ce que** les parois de puits (4a,4b,5a,5b) présentent tant dans la zone supérieure (4) que dans la zone inférieure (5) des zones de type tamis, respectivement des zones partielles pour la fumigation transversale des granulés.

4. Dispositif selon une des revendications 1 à 3, **caractérisé en ce que** les fentes dans les tamis à fentes (10) s'étendent essentiellement dans la direction verticale.

5. Dispositif selon une des revendications 1 à 3, **caractérisé en ce que** dans la zone inférieure (5) la section transversale horizontale Q5 va en diminuant vers le bas au moins dans une dimension horizontale le long de la direction verticale, de telle sorte qu'une évacuation de type trémie soit formée.

6. Dispositif selon la revendication 5, **caractérisé en ce que** l'évacuation de type trémie (5) est constituée d'une paire de surfaces de rectangle se faisant face et d'une paire de surface de trapèze se faisant face, moyennant quoi les surfaces de rectangle se rattachent respectivement aux parois de puits se faisant face de la zone supérieure (4), dont la largeur horizontale correspond aux côtés de rectangle les plus longs de la section transversale Q4.

7. Dispositif selon la revendication 6, **caractérisé en ce que** les surfaces de rectangle présentent des tamis à fentes, dont les fentes s'étendent parallèlement aux côtés de rectangle.

8. Dispositif selon la revendication 7, **caractérisé en ce que** l'évacuation de type trémie (5) est constituée d'une première paire de surfaces de trapèze se faisant face et d'une deuxième paire de surfaces de trapèze se faisant face.

9. Dispositif selon la revendication 8, **caractérisé en ce que** dans une des paires des surfaces de trapèze (5a,5b), qui se rattachent aux parois de puits (4a,4b) les plus larges, les surfaces de trapèze sont constituées de tamis à fentes (10), dont les fentes s'étendent parallèlement les unes aux autres et perpendiculairement aux côtés de base (11,12) des surfaces de trapèze respectives.

10. Dispositif selon la revendication 8, **caractérisé en ce que** dans une des paires de surfaces de trapèze (5a,5b), qui se rattachent aux parois de puits les plus larges (4a,4b), les surfaces de trapèze sont constituées de tamis à fentes (20), dont les fentes sont disposées symétriquement à l'axe de symétrie A des surfaces de trapèze et s'étendent des deux côtés de l'axe de symétrie A parallèlement aux côtés obliques (23,24) des surfaces de trapèze respectives.

11. Dispositif selon la revendication 8, **caractérisé en ce que** dans une des paires de surfaces de trapèze (5a,5b) qui se rattachent aux parois de puits les plus larges (4a,4b), les surfaces de trapèze sont constituées de tamis à fentes (30), dont les fentes sont disposées symétriquement à l'axe de symétrie A des surfaces de trapèze et s'étendent des deux côtés de l'axe de symétrie parallèles les unes aux autres et parallèles à la bissectrice W entre l'axe de symétrie A et les côtés obliques respectifs (33,34) des surfaces de trapèze.

12. Dispositif selon la revendication 10, **caractérisé en ce que** la surface de trapèze présente une zone de rectangle (45), qui s'étend symétriquement autour de l'axe de symétrie A et dont les côtés s'étendent parallèlement, respectivement orthogonalement aux côtés de base (41,42) de la surface de trapèze respective, moyennant quoi à l'intérieur de la zone de rectangle (45) les fentes s'étendent parallèlement à l'axe de symétrie A de la surface de trapèze.

13. Dispositif selon une des revendications 9 à 12, **caractérisé en ce que** l'angle α entre l'axe de symétrie A de la surface de trapèze et les côtés obliques (23,24, ;33,34 ;43,44) des surfaces de trapèze est compris dans la plage entre 10° et 30° et de préférence s'élève environ à 20°.

14. Dispositif selon la revendication 14, **caractérisé en ce que** la longueur des côtés de rectangle (46,47), qui s'étendent parallèlement aux côtés de base (41,42) de la surface de trapèze, est située dans une plage qui s'étend depuis environ 1/10 de la longueur de la plus grande base (41) de la surface de trapèze jusqu'à la longueur de la plus petite base (42) de la surface de trapèze.

15. Dispositif selon une des revendications précédentes, **caractérisé en ce que** dans la zone supérieure (4) le rapport entre le côté de rectangle plus long L4 et le côté de rectangle plus court K4 de la section transversale Q4 est situé entre 20 :1 et 5 :1, de préférence environ 10 :1.

16. Dispositif selon une des revendications précédentes, **caractérisé en ce que** toutes les arêtes intérieures (4a,4f,4g,4h,5e,5f,5g,5h) dans les zones (4,5) du puits (1) sont chanfreinées ou arrondies, de telle sorte que les sections transversales horizontales Q4,Q5 soient de forme polygonale, ovale (rond de stade), notamment octogonale, et les sections transversales horizontales Q4,Q5 soient seulement approximativement de forme rectangulaire.

17. Dispositif selon une des revendications précédentes, **caractérisé en ce que** à l'intérieur du puits des toits (50) sont disposés, dont les pointes (51) sont dirigées vers le haut.

18. Dispositif selon la revendication 17, **caractérisé en ce que** les toits sont disposés en plusieurs rangées horizontales dans le puits (1), qui sont espacées verticalement les unes des autres.

19. Dispositif selon une des revendications 17 ou 18, **caractérisé en ce que** les toits (50) sont fixés sur le côté intérieur des grandes parois de puits (4a,4b) se faisant face.

20. Procédé pour le traitement ou le post-traitement thermique de matières plastiques sous forme de granulés, notamment de matière polyester comme du polyéthylèneterephtalate (PET), en utilisant le dispositif selon une des revendications 1 à 19, lequel procédé présente les étapes suivantes :
- garniture de la zone supérieure du puits avec des granulés ;
- fumigation des deux côtés des granulés se déplaçant vers le bas à travers le puits avec de l'air ou du gaz, notamment avec de l'azote pur, d'une température de 180° à 250°C, en direction transversale à travers les zones partielles de type tamis de la zone supérieure du puits ;
- fumigation des deux côtés des granulés se déplaçant vers le bas avec de l'air, du gaz, notamment avec de l'azote pur, d'une température d'environ 80° à 120° à travers les zones partielles de type tamis de la zone inférieure du puits ;
- extraction des granulés hors du puits à travers l'évacuation en forme de trémie.
